# EUROPÄISCHE PATENTSCHRIFT

(11) **EP 3 600 949 B1**
(45) Veröffentlichungstag und Bekanntmachung des Hinweises auf die Patenterteilung: **03.04.2024**
(21) Anmeldenummer: 18712191.8
(22) Anmeldetag: 19.03.2018
(51) Int. Cl.: B60L 58/19, H02J 7/00

(54) **ZWEISPANNUNGSBATTERIE**
TWO VOLTAGE BATTERY
BATTERIE A DEUX TENSIONS

(30) Priorität: 21.03.2017 DE 102017106017
(43) Veröffentlichungstag der Anmeldung: 05.02.2020
(73) Patentinhaber: HELLA GMBH & CO. KGAA, 59552 Lippstadt (DE)
(72) Erfinder: KÖRNER, Andre, 59557 Lippstadt (DE); LIEBSCHER, Hans-Joachim, 97080 Würzburg (DE)
(86) Internationale Anmeldenummer: PCT/EP2018/056802
(87) Internationale Veröffentlichungsnummer: WO 2018/172239

(56) Entgegenhaltungen:
- WO-A1-2017/001142
- WO-A1-2018/046442
- DE-A1-102012 010 711
- DE-A1-102013 113 182
- DE-A1-102014 201 358
- DE-A1-102016 008 052
- US-A1- 2005 212 495
- US-A1- 2014 225 443

## Beschreibung

Die Erfindung betrifft eine Zweispannungsbatterie für ein Fahrzeug
- mit mindestens einem Masseanschlusspunkt,
- mit einem ersten Bordnetzanschluss, an dem eine niedrige erste Bordnetzspannung gegenüber dem Masseanschlusspunkt bereitgestellt ist, und
- mit einem zweiten Bordnetzanschluss, an dem eine hohe zweite Bordnetzspannung gegenüber dem Masseanschlusspunkt bereitgestellt ist,
- wobei drei oder mehr Batteriesubmodule vorgesehen sind, welche sowohl bezogen auf den ersten Bordnetzanschluss und den Massenanschlusspunkt als auch bezogen auf den zweiten Bordnetzanschluss und den Massenanschlusspunkt zueinander parallel verschaltet sind,
- wobei in jedem Batteriesubmodul mindestens zwei Batteriezellblöcke sowie eine Mehrzahl von Schaltelementen zum wahlweisen parallelen und/oder seriellen Verbinden der Batteriezellblöcke vorgesehen sind,
- wobei in einer ersten Verbindungsanordnung der Batteriezellblöcke dieselben zwischen dem Masseanschluss und dem ersten Bordnetzanschluss zueinander parallel verschaltet sind derart, dass an dem ersten Bordnetzanschluss die erste Bordnetzspannung gegenüber dem Masseanschlusspunkt bereitgestellt ist, und
- wobei die Schaltelemente in einer zweiten Verbindungsanordnung der Batteriezellblöcke Batteriezellblöcke der Batteriesubmodule zwischen dem ersten Bordnetzanschluss und dem zweiten Bordnetzanschluss seriell miteinander verbinden derart, dass an dem zweiten Bordnetzanschluss zum Bereitstellen der zweiten Bordnetzspannung eine Spannung gegenüber dem ersten Bordnetzanschluss bereitgestellt ist, und
- wobei die Zweispannungsbatterie so eingerichtet ist, dass bei einer Umschaltung der Verbindungsanordnung der Batteriezellblöcke der Batteriesubmodule stets wenigstens ein Batteriesubmodul die erste Bordnetzspannung und ein anderes Batteriesubmodul die zweite Bordnetzspannung bereitstellt, so dass eine temporäre Unterbrechung in der Bereitstellung der niedrigen ersten Bordnetzspannung und der höheren zweiten Bordnetzspannung vermieden ist.

Eine Zweispannungsbatterie der eingangs genannten Art ist aus dem Dokument DE 10 2013 113 182 A1 bekannt. Die bekannte Zweispannungsbatterie ist so aufgebaut, dass in einem Zweispannungsbordnetz mittels der Batterie eine erste Gruppe von elektrischen Verbrauchern bei der ersten Bordnetzspannung betrieben werden kann und dass eine zweite Gruppe von elektrischen Verbrauchern bei der zweiten, höheren Bordnetzspannung betrieben werden kann. Beispielsweise dient die Zweispannungsbatterie der Energieversorgung für ein 12 V-Bordnetz und für ein 48 V-Bordnetz. Die zwei Spannungen können von der Zweispannungsbatterie insbesondere gleichzeitig über die Bordnetzanschlüsse zur Verfügung gestellt werden. Nach der Lehre des Dokumentes DE 10 2013 113 182 A1 kann durch jedes Batteriesubmodul unabhängig von jedem anderen Batteriesubmodul die höhere zweite Bordnetzspannung bereitgestellt werden.

Aufgabe der vorliegenden Erfindung ist es, eine Lebensdauer der Batterie zu verbessern, indem der Stromdurchsatz durch die verschiedenen Batteriezellblöcke der Zweispannungsbatterie angeglichen wird.

Zur Lösung der Aufgabe weist die Erfindung die Merkmale des Patentanspruchs 1 auf. Es ist insofern vorgesehen, dass die Spannung über alle Batteriezellblöcke des Batteriesubmoduls in der zweiten Verbindungsanordnung einer Spannung zwischen dem zweiten Bordnetzanschluss und dem ersten Bordnetzanschluss entspricht.

Der besondere Vorteil der Erfindung besteht darin, dass kein Batteriezellblock der erfindungsgemäßen Zweispannungsbatterie fest einer Bordnetzspannung und insbesondere nicht der ersten Bordnetzspannung zugeordnet ist. Es wird also nicht zwischen schaltenden und nicht schaltenden Batteriezellblöcken unterschieden. Es gelingt durch diese Maßnahme erfindungsgemäß, dass ein ausgeglichener Stromdurchsatz durch alle Batteriezellblöcke und alle Batteriezellen der verschiedenen Batteriezellblöcke gewährleistet ist mit der Folge, dass die Lebensdauer der Zweispannungsbatterie optimiert wird. Zugleich entfällt die Notwendigkeit, einen Energietransfer zwischen stark aufgeladenen und schwach aufgeladenen Stellen durchzuführen. Insofern vereinfacht sich der Aufbau der einzelnen Batteriezellen und es kann eine große Anzahl von Batteriezellen und/oder Batteriesubmodulen baugleich und kostengünstig realisiert werden. Da zu jedem Zeitpunkt wenigstens ein Batteriesubmodul für jede Bordnetzspannung bereitsteht, kann konsequenter Weise auf die Stützenergiespeicher für den bei der ersten Bordnetzspannung betriebenen ersten elektrischen Verbraucher und den bei der zweiten Bordnetzspannung betriebenen zweiten elektrischen Verbraucher verzichtet werden.

Aus dem Dokument US 2005/0212495 A1, Fig. 10 ist eine Mehrspannungsbatterie bekannt, die insgesamt vier Batteriezellblöcke 11, 12, 61, 62 aufweist. Je zwei Batteriezellblöcke bilden dabei ein Paar 11, 12 und 61, 62. Die Blöcke dieser Paare sind durch Schalter 13, 14, 15, 16 bzw. 63, 64, 65, 66 verbunden. Die Schalter können so geschaltet werden, dass die Blöcke der Paare in Reihe oder parallelgeschaltet sind. An verschiedenen Stellen A, B, C bzw. A', B', C' kann je eine Spannung abgegriffen werden. Durch weitere Schalter 67, 68, 69, 70 können die Paare parallel oder in Reihe geschaltet werden. Allerdings ist es nicht möglich, dass das eine Paar parallel und das andere Paar in Reihe geschaltet ist und die Paare gleichzeitig in Reihe geschaltet sind und an einem ersten Bordnetzanschluss 20 eine erste Bordnetzspannung 12 V und an einem zweiten Bordnetzanschluss eine zweite Bordnetzspannung von 36 V liefern. Entsprechende Anschlüsse für 36 V sind nicht vorgesehen. Das wäre allerdings notwendig, wenn das Dokument US 2005/0212495 A1 eine Anregung für die Erfindung liefern sollte.

Da es bei der Batterie aus der Fig. 10 nicht möglich ist, eine Parallelschaltung von Batteriezellblöcken und eine Reihenschaltung von Batteriezellblöcken in Reihe zu schalten und dabei einem Knoten zwischen der Parallelschaltung und der Reihenschaltung eine erste Bordnetzspannung und an dem Ausgang der Reihenschaltung eine zweite Bordnetzspannung abzugreifen, erfindungsgemäß genau das aber von den Batteriesubmodulen gefordert ist, konnte das Dokument US 2005/0212495 A1 einem Fachmann keine Anregung zur Vollendung der Erfindung liefern.

Aus US2014/225443 A1 ist eine weitere Mehrspannungsbatterie bekannt.

Das Aufladen der Batteriezellen beziehungsweise der Batteriezellblöcke erfolgt beispielsweise durch einen der Zweispannungsbatterie zugeordneten Generator, welcher konventionell betrieben wird, beziehungsweise durch die Rückgewinnung von Bremsenergie.

Nach einer bevorzugten Ausführungsform der Erfindung sind in der zweiten Verbindungsanordnung ein Minuspol eines ersten Batteriezellblocks des Batteriesubmoduls mit dem ersten Bordnetzanschluss und ein Pluspol eines letzten Batteriezellblocks des Batteriesubmoduls mit dem zweiten Bordnetzanschluss verbunden sind. Optional sind weitere Batteriezellblöcke des Batteriesubmoduls zwischen dem ersten Batteriezellblock und dem letzten Batteriezellblock in Reihe verschaltet. Der Minuspol des ersten Batteriezellblocks liegt dann auf dem Spannungsniveau des ersten Bordnetzanschlusses und der zweite Bordnetzanschluss weist ein um die Summe der Einzelspannungen der Batteriezellblöcke höheres Spannungsniveau auf.

Erfindungsgemäß sind drei oder mehr Batteriesubmodule vorgesehen, welche bezogen auf den ersten Bordnetzanschluss und bezogen auf den zweiten Bordnetzanschluss zueinander parallel verschaltet sind. Beim Vorsehen von drei Batteriesubmodulen vereinfacht sich das Umschalten der Konfiguration der Batteriesubmodule dahingehend, dass auch bei der Umschaltung selbst stets wenigstens ein Batteriesubmodul die erste Bordnetzspannung und ein zweites Batteriesubmodul die zweite Bordnetzspannung bereitstellen kann. Eine jedenfalls temporäre Unterbrechung in der Bereitstellung der niedrigen ersten Bordnetzspannung und der höheren zweiten Bordnetzspannung wird hierdurch vermieden.

Nach einer Weiterbildung der Erfindung sind alle Batteriesubmodule baugleich ausgeführt. Sie weisen insofern die gleiche Anzahl von Schaltelementen und die gleiche Anzahl von Batteriezellblöcken beziehungsweise Batteriezellen auf. Darüber hinaus ist die Konfiguration der Schaltelemente und Batteriezellblöcke beziehungsweise Batteriezellen aller Batteriesubmodule identisch. Vorteilhaft vereinfacht sich der Aufbau der Zweispannungsbatterie und die Batteriesubmodule können in großer Stückzahl kostengünstig baugleich hergestellt werden.

Nach einer Weiterbildung der Erfindung ist zwischen dem ersten Anschlusspunkt und dem zweiten Anschlusspunkt der Zweispannungsbatterie ein DC/DC-Wandler vorgesehen zur Stützung der Bordnetze.

Nach einer Weiterbildung der Erfindung sieht die erfindungsgemäße Zweispannungsbatterie einen zusätzlichen Bordnetzanschluss vor. In Bezug auf den zusätzlichen Bordnetzanschluss können die mindestens zwei Batteriezellblöcke des mindestens einen Batteriesubmoduls über die Schaltelemente sowie über zusätzliche Schaltelemente in eine Parallelverschaltung und/oder in eine Seriellverschaltung verbracht werden. Alle Batteriesubmodule der Zweispannungsbatterie sind dabei bezogen auf den zusätzlichen Bordnetzanschluss zueinander parallel verschaltet angeordnet. Vorteilhaft kann durch die Vorsehung des zusätzlichen Bordnetzanschlusses eine Entkopplung zwischen dem an der niedrigen Bordnetzspannung betriebenen ersten Bordnetz und dem an der hohen Bordnetzspannung betriebenen zweiten Bordnetz erreicht werden. Insbesondere für den Fall, dass das zweite Bordnetz aufgrund der dort betriebenen Verbraucher hohen Belastungen und insbesondere im zeitlichen Verlauf wechselnden Belastungen ausgesetzt ist, kann bei einer Trennung der Bordnetze die Versorgung der Verbraucher des ersten Bordnetzes unabhängig und zuverlässig erfolgen.

Nach einer Weiterbildung der Erfindung ist an dem zusätzlichen Bordnetzanschluss die erste Bordnetzspannung bereitgestellt. Der zusätzliche Bordnetzanschluss kann bevorzugt allein batterieintern bereitstehen. Es ist insofern nicht vorgesehen, dass ein Abgriff für den zusätzlichen Bordnetzanschluss über das Gehäuse der Zweispannungsbatterie nach außen geführt ist. Vorteilhaft kann der zusätzliche Bordnetzanschluss ein Grundspannungsniveau für die zweite hohe Bordnetzspannung bereitstellen. Er übernimmt insofern - allerdings allein batterieintern - die elektrotechnische Funktion des ersten Bordnetzanschlusses. Gleichwohl ist der erste Bordnetzanschluss vom zusätzlichen Bordnetzanschluss und/oder vom zweiten Bordnetzanschluss getrennt realisiert und entkoppelt.

Nach einer Weiterbildung der Erfindung ist eine Detektoreinheit vorgesehen. Mittels der Detektoreinheit werden ein Ladestrom und/oder ein Entladestrom und/oder eine geprägte Spannung und/oder eine Spannungsänderung an dem zweiten Bordnetzanschluss detektiert. Bevorzugt ist des Weiteren eine Zentralsteuereinheit vorgesehen, welche zur Betätigung der Schaltelemente und/oder der zusätzlichen Schaltelemente ausgebildet ist und mit diesen insofern in einer Wirkverbindung steht. Die Schaltelemente werden hierbei in Abhängigkeit von einem der Zentralsteuereinheit zugeführten Eingangssteuersignal betätigt. Als Eingangssteuersignal für die Zentralsteuereinheit dient beispielsweise ein Ausgangssignal der Detektoreinheit. Vorteilhaft kann durch das Vorsehen der Detektoreinheit und ihr Zusammenwirken mit der Zentralsteuereinheit eine lastabhängige Betätigung der Schaltelemente und damit eine sichere Versorgung der Verbraucher in dem ersten Bordnetz und in dem zweiten Bordnetz erreicht werden. Insbesondere können bei hohen Lade- beziehungsweise Entladeströmen oder bei plötzlichen Spannungsänderungen die Bordnetze schaltungstechnisch getrennt oder durch das Umschalten von Batteriezellblöcken ein besonders hoch belastetes Bordnetz gestützt werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigt:
- Fig. 1: eine nicht erfindungsgemäße Zweispannungsbatterie mit einem Batteriesubmodul,
- Fig. 2: die nicht erfindungsgemäße Zweispannungsbatterie mit zwei Batteriesubmodulen in einer ersten Konfiguration,
- Fig. 3: die nicht erfindungsgemäße Zweispannungsbatterie mit zwei Batteriesubmodulen in einer zweiten Konfiguration,
- Fig. 4: die erfindungsgemäße Zweispannungsbatterie mit drei Batteriesubmodulen in einer ersten Konfiguration,
- Fig. 5: die erfindungsgemäße Zweispannungsbatterie mit drei Batteriesubmodulen in einer zweiten Konfiguration,
- Fig. 6: die erfindungsgemäße Zweispannungsbatterie mit drei Batteriesubmodulen in einer dritten Konfiguration,
- Fig. 7: eine Detailansicht eines Batteriesubmoduls der Zweispannungsbatterie nach Fig. 6 und
- Fig. 8: eine Gegenüberstellung der Ströme durch die einzelnen Batteriezellblöcke einer erfindungsgemäßen Zweispannungsbatterie und einer Zweispannungsbatterie nach dem Stand der Technik.

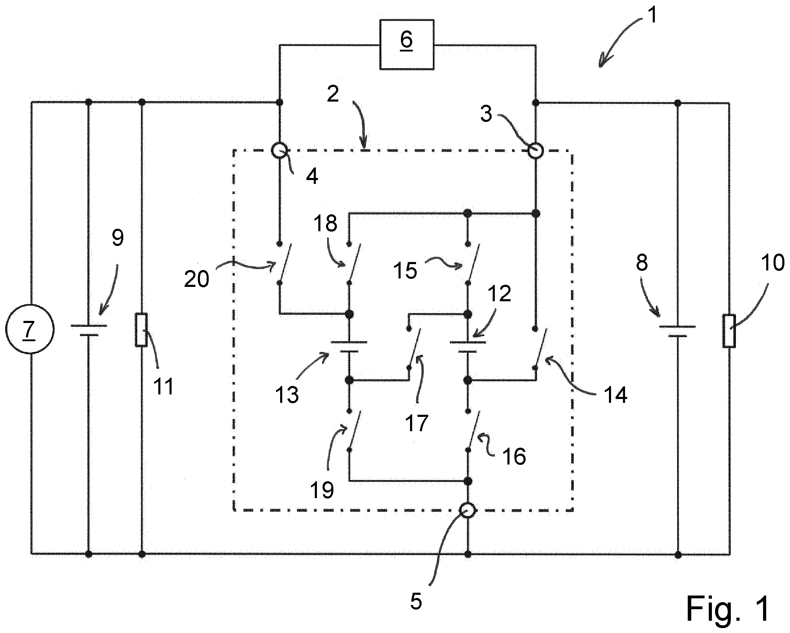

Eine Zweispannungsbatterie 1 nach Fig. 1 umfasst als wesentliche Funktionskomponenten ein erstes Batteriesubmodul 2 mit einem ersten Bordnetzanschluss 3, mit einem zweiten Bordnetzanschluss 4 und mit einem Masseanschlusspunkt 5, einen zwischen den Masseanschlusspunkten 3, 4 vorgesehenen DC/DC-Wandler 6, einen exemplarisch den zweiten Bordnetzanschluss 4 zugeordneten Generator 7 sowie einen ersten Stützenergiespeicher 8 und einen zweiten Stützenergiespeicher 9. Der erste Stützenergiespeicher 8 ist einem exemplarisch dargestellten Verbraucher 10 zugeordnet, welcher an dem ersten Bordnetzanschluss 3 angeschlossen und bei einer niedrigen ersten Bordnetzspannung betrieben wird. Der zweite Stütz?energiespeicher 9 ist einem zweiten Verbraucher 11 zugeordnet, welcher an dem zweiten Bordnetzanschluss 4 angeschlossen ist und bei einer zweiten, hohen Bordnetzspannung betrieben wird.

Das Batteriesubmodul 2 der Zweispannungsbatterie 1 umfasst zwei Batteriezellblöcke 12, 13. Den zwei Batteriezellblöcken 12, 13, welche aus einer Mehrzahl von nicht einzeln dargestellten, vorzugsweise baugleichen Batteriezellen aufgebaut ist, ist eine Mehrzahl von Schaltelementen 14, 15, 16, 17, 18, 19, 20 zugeordnet. Die Schaltelemente 14, 15, 16, 17, 18, 19, 20 sind ausgebildet und angeordnet zum wahlweisen parallelen und seriellen Verschalten der Batteriezellblöcke 12, 13.

In einer ersten Verbindungsanordnung sind die Batteriezellblöcke 12, 13 des Batteriesubmoduls 2 parallel verschaltet derart, dass an dem ersten Bordnetzanschluss 3 die erste Bordnetzspannung bereitgestellt ist. In der ersten Verbindungsanordnung sind demzufolge die Schaltelemente 15, 16, 18, 19 geschlossen und die Schaltelemente 14, 17, 20 geöffnet.

In einer zweiten Verbindungsanordnung sind die Batteriezellblöcke 12, 13 des Batteriesubmoduls 2 seriell verschaltet. In der zweiten Verbindungsanordnung ist an dem zweiten Bordnetzanschluss 4 die zweite Bordnetzspannung bereitgestellt. In der zweiten Verbindungsanordnung sind zur seriellen Verschaltung der Batteriezellblöcke 12, 13 die Schaltelemente 14, 17, 20 geschlossen und die Schaltelemente 15, 16, 18, 19 geöffnet.

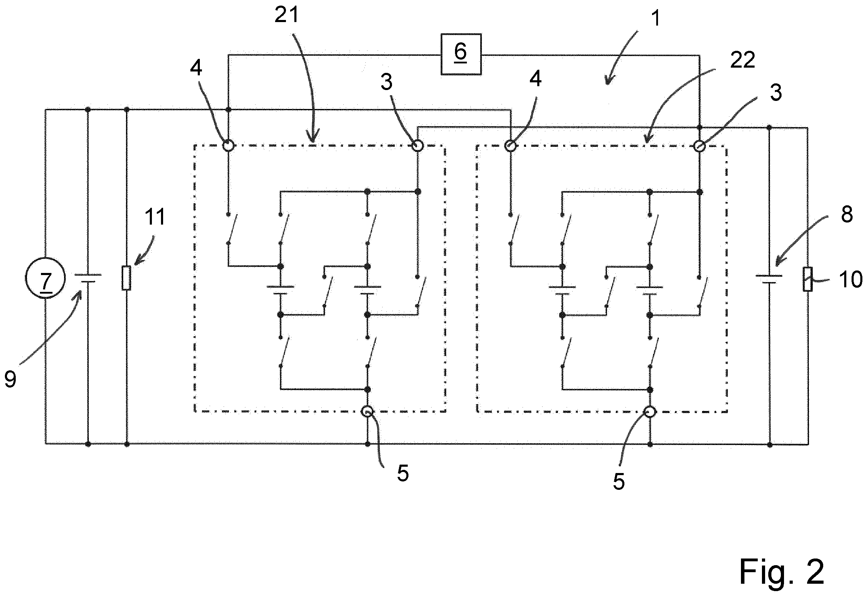

Nach der Ausführungsform gemäß Fig. 2 umfasst die Zweispannungsbatterie 1 nunmehr zwei baugleiche Batteriesubmodule 21, 22. Der innere Aufbau der Batteriesubmodule 21, 22 entspricht dem Aufbau des Batteriesubmoduls 2 nach Fig. 1. Auf eine detaillierte Wiederholung des Aufbaus wird daher verzichtet.

Durch das Vorsehen der zwei baugleichen Batteriesubmodule 21, 22 können an der Zweispannungsbatterie 1 zeitgleich die erste Bordnetzspannung und die zweite Bordnetzspannung bereitgestellt werden. Darüber hinaus können die Verbindungsanordnungen der Batteriesubmodule 21, 22 umgeschaltet werden. Temporär übernimmt dabei der erste Stützenergiespeicher 8 und/oder der zweite Stützenergiespeicher 9 die Versorgung der Verbraucher 10, 11 im ersten Bordnetz beziehungsweise im zweiten Bordnetz.

Sofern beispielsweise das erste Batteriesubmodul 21 ursprünglich die hohe zweite Bordnetzspannung an dem zweiten Bordnetzanschluss 4 bereitgestellt hat und das zweite Batteriesubmodul 22 die niedrige erste Bordnetzspannung an dem ersten Bordnetzanschluss 3, kann das erste Batteriesubmodul 21 von der zweiten Verbindungsanordnung in die erste Verbindungsanordnung verbracht werden. Es ist dann jedenfalls kurzfristig von dem ersten Batteriesubmodul 21 und von dem zweiten Batteriesubmodul 22 die erste Bordnetzspannung an dem ersten Bordnetzanschluss 3 bereitgestellt. Der elektrische Verbraucher 11, welcher an der zweiten Bordnetzspannung betrieben wird, wird dann temporär über den zweiten Stützenergiespeicher 9 betrieben. Im Weiteren wird nachfolgend das zweite Batteriesubmodul 22 von der ersten Verbindungsanordnung in die zweite Verbindungsanordnung verbracht, sodass nunmehr von dem zweiten Batteriesubmodul 22 die zweite Bordnetzspannung für den zweiten Verbraucher 11 bereitgestellt ist.

Die vorstehenden Ausführungen machen deutlich, dass beim Vorsehen von zwei Batteriesubmodulen 21, 22 exemplarisch der erste Verbraucher 10 an der ersten Bordnetzspannung dauerhaft von der Zweispannungsbatterie 1 mit Energie versorgt werden kann. Der erste Stützenergiespeicher 8, welcher dem ersten Bordnetz beziehungsweise dem Verbraucher 10 im ersten Bordnetz zugeordnet ist, ist insofern entbehrlich.

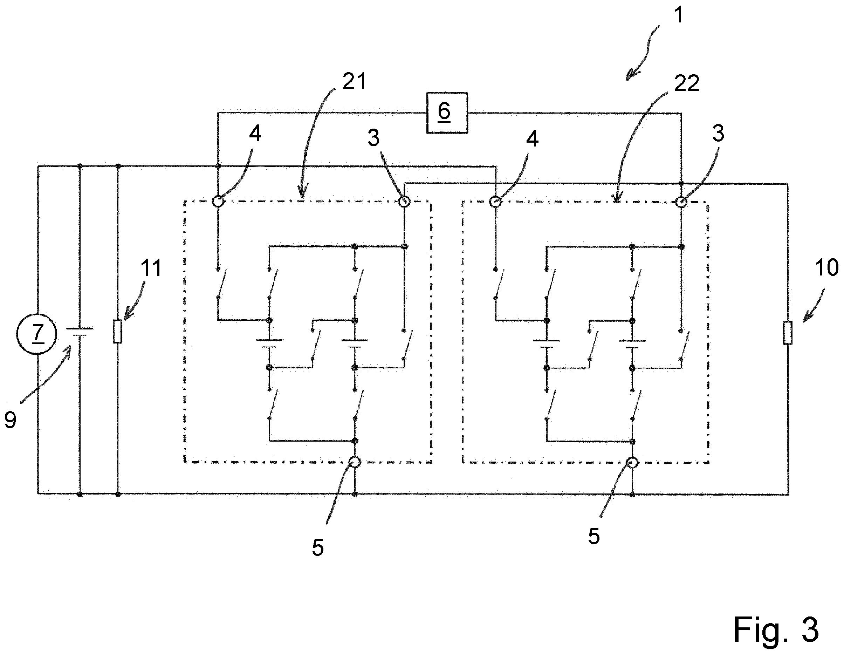

Eine entsprechend angepasste und vereinfachte Konfiguration der Zweispannungsbatterie 1 ist exemplarisch in **Fig. 3** dargestellt. Es ist in Fig. 3 die Zweispannungsbatterie 1 mit zwei baugleichen Batteriesubmodulen 21, 22 vorgesehen, welche im Vergleich zu der Konfiguration nach Fig. 2 allein auf den Stützenergiespeicher 8 für das erste Bordnetz verzichtet und ansonsten der ersten Konfiguration der Zweispannungsbatterie 1 mit zwei Batteriesubmodulen 21, 22 gemäß Fig. 2 entspricht.

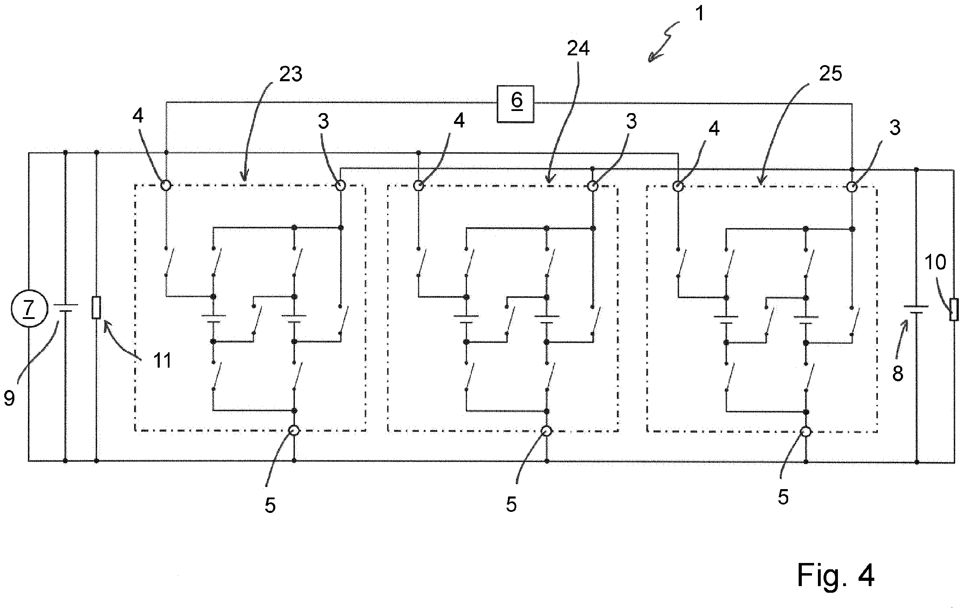

Die erfindungsgemäße Zweispannungsbatterie 1 mit drei identischen Batteriesubmodulen 23, 24, 25 nach **Fig. 4** ist derart redundant ausgeführt, dass dauerhaft und insbesondere auch beim Ändern beziehungsweise Umschalten der Verbindungsanordnung für die Batteriesubmodule 23, 24, 25 je wenigstens ein Batteriesubmodul 23, 24, 25 die erste Bordnetzspannung an dem ersten Bordnetzanschluss 3 beziehungsweise wenigstens ein Batteriesubmodul 23, 24, 25 die zweite Bordnetzspannung an dem zweiten Bordnetzanschluss 4 bereitstellt.

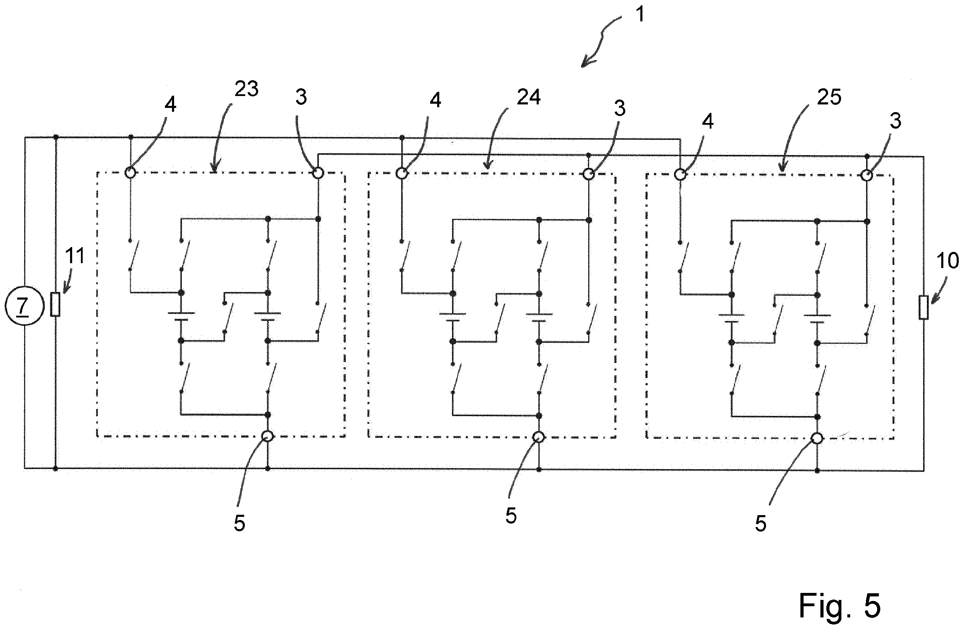

Da zu jedem Zeitpunkt wenigstens ein Batteriesubmodul 23, 24, 25 für jede Bordnetzspannung bereitsteht, kann konsequenter Weise auf die Stützenergiespeicher 8, 9 für den bei der ersten Bordnetzspannung betriebenen ersten elektrischen Verbraucher 10 und den bei der zweiten Bordnetzspannung betriebenen zweiten elektrischen Verbraucher 11 verzichtet werden. Eine entsprechend angepasste Konfiguration ist in **Fig. 5** dargestellt.

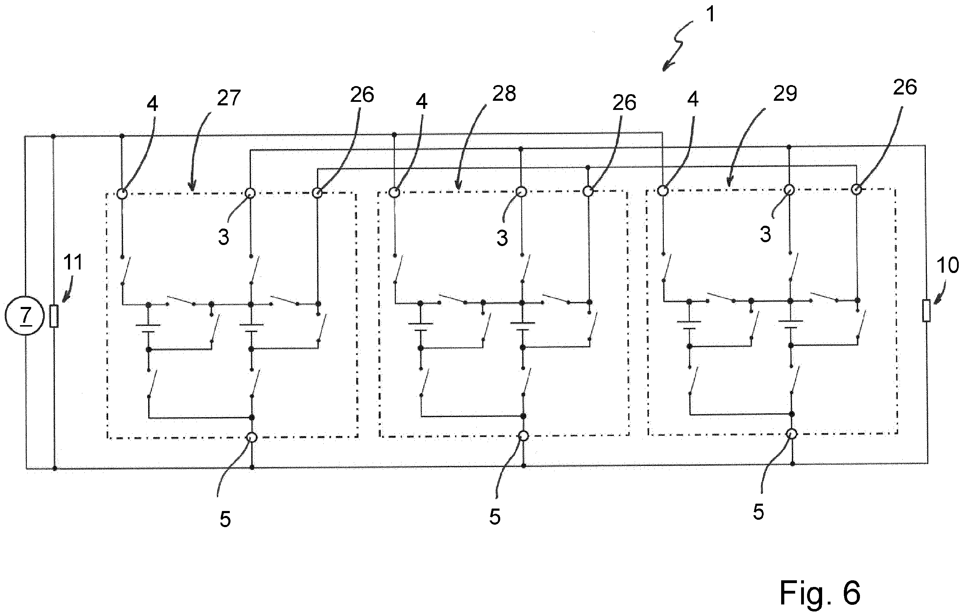

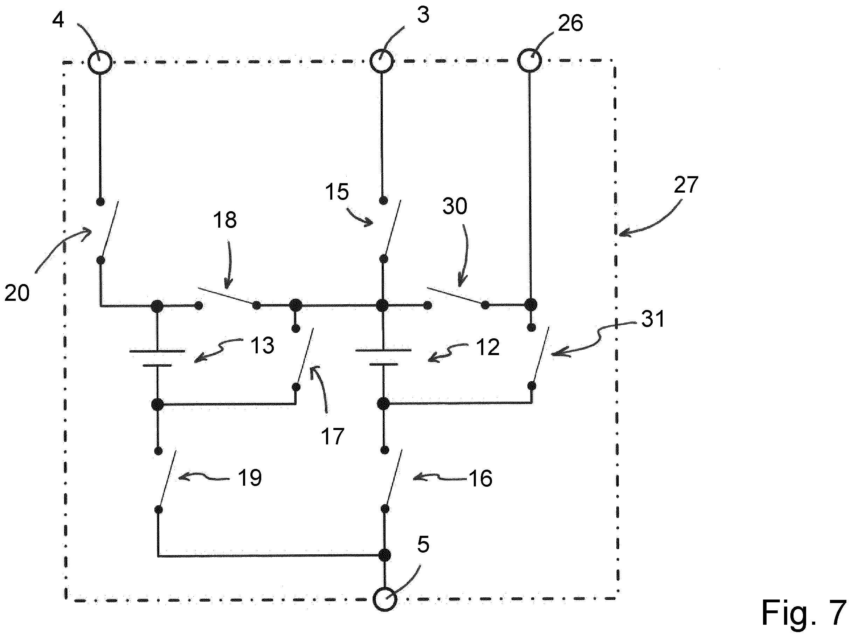

Nach einer weiteren Ausführungsform der Erfindung gemäß den Fig. 6 und 7 ist vorgesehen, dass batterieintern ein zusätzlicher Bordnetzanschluss 26 ausgebildet ist und dass die drei Batteriesubmodule 27, 28, 29 der erfindungsgemäßen Zweispannungsbatterie 1 an dem zusätzlichen Bordnetzanschluss 26 ebenso wie an dem ersten Bordnetzanschluss 3 die niedrige erste Bordnetzspannung bereitstellen. An dem zweiten Bordnetzanschluss 4 ist unverändert die hohe zweite Bordnetzspannung bereitgestellt.

Die Batteriesubmodule 27, 28, 29 können an dem ersten Bordnetzanschluss 3 die niedrige erste Bordnetzspannung bereitstellen, indem die Schaltelemente 15, 16, 18, 19 geschlossen sind und alle weiteren Schaltelemente 17, 20 sowie zusätzlich vorgesehene Schaltelemente 30, 31 geöffnet sind. Die niedrige erste Bordnetzspannung kann überdies gleichzeitig am ersten Bordnetzanschluss 3 und an dem zusätzlichen Bordnetzanschluss 26 bereitgestellt werden, indem zusätzlich das zusätzliche Schaltelement 30 geschlossen ist. In analoger Weise kann die niedrige erste Bordnetzspannung allein an dem zusätzlichen Bordnetzanschluss 26 bereitgestellt werden, indem das zusätzliche Schaltelement 30 geschlossen und das Schaltelement 15 geöffnet ist. Eine Bereitstellung der hohen zweiten Bordnetzspannung erfolgt bevorzugt, indem ausgehend von dem zusätzlichen Bordnetzanschluss 26 die Batteriezellblöcke 12, 13 seriell verschaltet werden. Hierzu werden das zusätzliche Schaltelement 31 sowie die Schaltelemente 17 und 20 geschlossen, während alle weiteren Schaltelemente sowie das zusätzliche Schaltelement 30 geöffnet sind.

Durch das Vorsehen des zusätzlichen Bordnetzanschlusses 26 kann bei einer Zweispannungsbatterie beispielsweise ein erstes Batteriesubmodul 27 an dem ersten Bordnetzanschluss 3 die niedrige erste Spannung bereitstellen zur Versorgung des elektrischen Verbrauchers 10 im ersten Bordnetz. Ein zweites Batteriesubmodul 28 kann die niedrige erste Bordnetzspannung an dem zusätzlichen Bordnetzanschluss 26 bereitstellen. Bezugnehmend auf den zusätzlichen Bordnetzanschluss 26 kann dann das dritte Batteriesubmodul 29 die hohe zweite Bordnetzspannung bereitstellen zur Versorgung des elektrischen Verbrauchers 11 im zweiten Bordnetz. Das erste Bordnetz und das zweite Bordnetz sind hierbei voneinander getrennt, sodass beispielsweise hohe Lade- beziehungsweise Entladeströme im zweiten Bordnetz beziehungsweise Spannungsänderungen im zweiten Bordnetz keine Rückwirkungen auf das erste Bordnetz ausüben. Der elektrische Verbraucher 10 im ersten Bordnetz ist insofern zuverlässig mit elektrischer Energie versorgt.

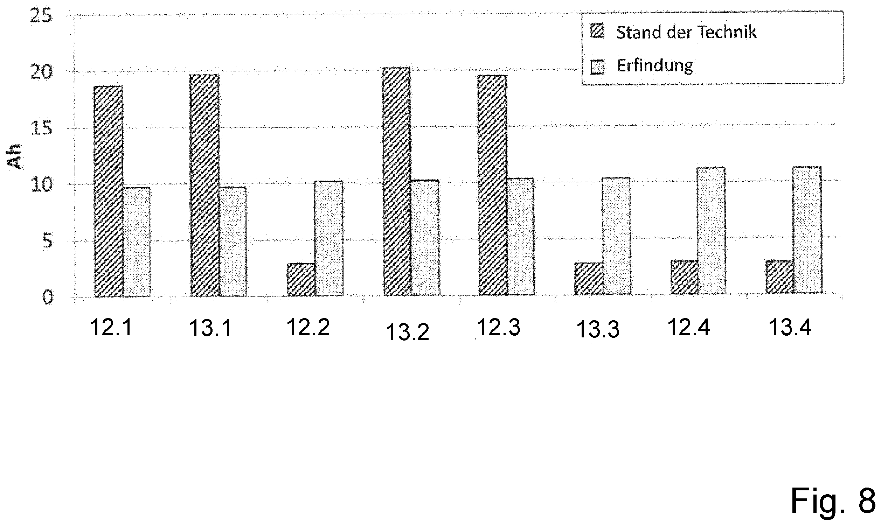

Fig. 8 zeigt eine Gegenüberstellung einer erfindungsgemäßen Zweispannungsbatterie gegenüber einer aus dem Stand der Technik bekannten Zweispannungsbatterie.

Hierbei ist angenommen, dass die erfindungsgemäße Zweispannungsbatterie vier Batteriesubmodule mit jeweils zwei Batteriezellblöcken 12.1, 12.2, 12.3, 12.4, 13.1, 13.2, 13.3, 13.4 aufweist, welche in der dargelegten Form die erste Bordnetzspannung an dem ersten Bordnetzanschluss 3 und/oder die zweite Bordnetzspannung an dem zweiten Bordnetzanschluss 4 bereitstellen. Ein zusätzlicher Bordnetzanschluss 26 kann optional vorgesehen sein. Demgegenüber sieht die in Bezug genommene Zweispannungsbatterie nach dem Stand der Technik zwei Batteriezellblöcke 12.4, 13.4 vor, welche dauerhaft der Versorgung des ersten Bordnetzes bei der ersten Bordnetzspannung dienen. Darüber hinaus sind zwei Batteriesubmodule mit jeweils drei Batteriezellen vorgesehen, welche parallel verschaltet werden können zur Bereitstellung der ersten Bordnetzspannung und/oder in einer Seriellverschaltung die zweite Bordnetzspannung bereitstellen.

Die Gegenüberstellung zeigt deutlich, dass nach der erfindungsgemäßen Zweispannungsbatterie die Batterieströme über alle Batteriezellblöcke im Wesentlichen gleich ausgebildet ist und alle Batteriezellblöcke dementsprechend eine gleiche Belastung und/oder eine sehr ähnliche Lebensdauer aufweisen. Demgegenüber sind bei der aus dem Stand der Technik bekannten Zweispannungsbatterie einzelne Batteriezellblöcke sehr stark belastet, wohingegen andere Batteriezellblöcke einen sehr geringen Batteriestrom aufweisen. Die Lebensdauer der aus dem Stand der Technik bekannten Zweispannungsbatterie ist daher geringer als die Lebensdauer der erfindungsgemäßen Zweispannungsbatterie.

Gleiche Bauteile und Bauteilfunktionen sind durch gleiche Bezugszeichen gekennzeichnet.

### Bezugszeichenliste

- 1: Zweispannungsbatterie
- 2: Batteriesubmodul
- 3: Bordnetzanschluss
- 4: Bordnetzanschluss
- 5: Masseanschlusspunkt
- 6: DC/DC-Wandler
- 7: Generator
- 8: Stützenergiespeicher
- 9: Stützenergiespeicher
- 10: Verbraucher
- 11: Verbraucher
- 12: Batteriezellblock
- 12.1: Batteriezellblock
- 12.2: Batteriezellblock
- 12.3: Batteriezellblock
- 12.4: Batteriezellblock
- 13: Batteriezellblock
- 13.1: Batteriezellblock
- 13.2: Batteriezellblock
- 13.3: Batteriezellblock
- 13.4: Batteriezellblock
- 14: Schaltelement
- 15: Schaltelement
- 16: Schaltelement
- 17: Schaltelement
- 18: Schaltelement
- 19: Schaltelement
- 20: Schaltelement
- 21: Batteriesubmodul
- 22: Batteriesubmodul
- 23: Batteriesubmodul
- 24: Batteriesubmodul
- 25: Batteriesubmodul
- 26: Bordnetzanschluss
- 27: Batteriesubmodul
- 28: Batteriesubmodul
- 29: Batteriesubmodul
- 30: Schaltelement
- 31: Schaltelement

## Patentansprüche

1. Zweispannungsbatterie (1) für ein Fahrzeug
- mit mindestens einem Masseanschlusspunkt (5),
- mit einem ersten Bordnetzanschluss (3), an dem eine niedrige erste Bordnetzspannung gegenüber dem Masseanschlusspunkt (5) bereitgestellt ist, und
- mit einem zweiten Bordnetzanschluss (4), an dem eine hohe zweite Bordnetzspannung gegenüber dem Masseanschlusspunkt (5) bereitgestellt ist,
- wobei drei oder mehr Batteriesubmodule (23, 24, 25) vorgesehen sind, welche sowohl bezogen auf den ersten Bordnetzanschluss (3) und den Massenanschlusspunkt (5) als auch bezogen auf den zweiten Bordnetzanschluss (4) und den Massenanschlusspunkt (5) zueinander parallel verschaltet sind,
- wobei in jedem Batteriesubmodul (23, 24, 25) mindestens zwei Batteriezellblöcke (12, 13) sowie eine Mehrzahl von Schaltelementen (14, 15, 16, 17, 18, 19, 20) zum wahlweisen parallelen und/oder seriellen Verbinden der Batteriezellblöcke (12, 13) vorgesehen sind,
- wobei in einer ersten Verbindungsanordnung der Batteriezellblöcke (12, 13) dieselben zwischen dem Masseanschlusspunkt (5) und dem ersten Bordnetzanschluss (3) zueinander parallel verschaltet sind derart, dass an dem ersten Bordnetzanschluss (3) die erste Bordnetzspannung gegenüber dem Masseanschlusspunkt (5) bereitgestellt ist, und
- wobei die Schaltelemente (14, 15, 16, 17, 18, 19, 20) in einer zweiten Verbindungsanordnung der Batteriezellblöcke (12, 13) die Batteriezellblöcke (12, 13) der Batteriesubmodule zwischen dem ersten Bordnetzanschluss (3) und dem zweiten Bordnetzanschluss (4) seriell miteinander verbinden derart, dass an dem zweiten Bordnetzanschluss (4) zum Bereitstellen der zweiten Bordnetzspannung eine Spannung gegenüber dem ersten Bordnetzanschluss (3) bereitgestellt ist, und
- wobei die Zweispannungsbatterie (1) so eingerichtet ist, dass bei einer Umschaltung der Verbindungsanordnung der Batteriezellblöcke (12, 13) der Batteriesubmodule stets wenigstens ein Batteriesubmodul (23, 24, 25) die erste Bordnetzspannung und ein anderes Batteriesubmodul (23, 24, 25) die zweite Bordnetzspannung bereitstellt, so dass eine temporäre Unterbrechung in der Bereitstellung der niedrigen ersten Bordnetzspannung und der höheren zweiten Bordnetzspannung vermieden ist,
wobei
eine Spannung über alle Batteriezellblöcke (12, 13) des Batteriesubmoduls (23, 24, 25) in der zweiten Verbindungsanordnung der Spannung zwischen dem zweiten Bordnetzanschluss (4) und dem ersten Bordnetzanschluss (3) entspricht.

2. Zweispannungsbatterie (1) nach Anspruch 1, **dadurch gekennzeichnet, dass** in der zweiten Verbindungsanordnung ein Minuspol eines ersten Batteriezellblocks (12) des Batteriesubmoduls (23, 24, 25) mit dem ersten Bordnetzanschluss (3) und ein Pluspol eines letzten Batteriezellblocks (13) des Batteriesubmoduls (23, 24, 25) mit dem zweiten Bordnetzanschluss (4) verbunden sind.

3. Zweispannungsbatterie (1) nach Anspruch 2, **dadurch gekennzeichnet, dass** alle Batteriesubmodule (23, 24, 25) baugleich ausgeführt sind.

4. Zweispannungsbatterie (1) nach einem der Ansprüche 1 bis 3, **dadurch gekennzeichnet, dass** zwischen dem ersten Bordnetzanschluss (3) und dem zweiten Bordnetzanschluss (4) ein DC/DC-Wandler (6) vorgesehen ist.

5. Zweispannungsbatterie (1) nach einem der Ansprüche 1 bis 4, **dadurch gekennzeichnet, dass** ein zusätzlicher Bordnetzanschluss (26) bereitgestellt ist, wobei die Batteriezellblöcke (12, 13) des mindestens einen Batteriesubmoduls (23, 24, 25) über die Schaltelemente (14, 15, 16, 17, 18, 19, 20) und/oder über zusätzliche Schaltelemente (30, 31) bezogen auf den zusätzlichen Bordnetzanschluss (26) in eine Parallelverschaltung als eine dritte Verbindungsanordnung und/oder in eine Seriellverschaltung als eine vierte Verbindungsanordnung verbringbar sind und wobei alle Batteriesubmodule (23, 24, 25) bezogen auf den zusätzlichen Bordnetzanschluss (26) zueinander parallel angeordnet sind.

6. Zweispannungsbatterie (1) nach Anspruch 5, **dadurch gekennzeichnet, dass** der zusätzliche Bordnetzanschluss (26) nur batterieintern ausgebildet ist und/oder dass an dem zusätzlichen Bordnetzanschluss (26) die erste Bordnetzspannung bereitgestellt ist.

7. Zweispannungsbatterie (1) nach einem der Ansprüche 1 bis 6, **dadurch gekennzeichnet, dass** eine Detektoreinheit vorgesehen ist zur Detektion eines Lade- und/oder Entladestroms und/oder einer eingeprägten Spannung und/oder einer Spannungsänderung an dem zweiten Bordnetzanschluss (4).

8. Zweispannungsbatterie (1) nach einem der Ansprüche 1 bis 7, **dadurch gekennzeichnet, dass** eine mit den Schaltelementen (14, 15, 16, 17, 18, 19, 20) und/oder den zusätzlichen Schaltelementen (30, 31) zusammenwirkende Zentralsteuereinheit vorgesehen ist, welche in Abhängigkeit von einem Eingangssteuersignal die Schaltelemente (14, 15, 16, 17, 18, 19, 20) und/oder die zusätzlichen Schaltelemente (30, 31) betätigt zum Verbringen der Batteriezellblöcke (12, 13) in die erste Verbindungsanordnung und/oder in die zweite Verbindungsanordnung und/oder in die dritte Verbindungsanordnung und/oder in die vierte Verbindungsanordnung.

9. Zweispannungsbatterie (1) nach Anspruch 7 und 8, **dadurch gekennzeichnet, dass** das Eingangssteuersignal für die Zentralsteuereinheit von der Detektoreinheit bereitgestellt ist.

## Claims

1. Two voltage battery (1) for a vehicle
- with at least one ground connection point (5),
- with a first connection to the vehicle electrical system (3), at which a low first vehicle electrical system voltage in relation to the ground connection point (5) is made available, and
- with a second connection to the vehicle electrical system (4), at which a high second vehicle electrical system voltage in relation to the ground connection point (5) is made available and,
- wherein three or more battery submodules (23, 24, 25) are provided which are wired in parallel to each other not only in relation to the first connection to the vehicle electrical system (3) and the ground connection point (5) but also to the second connection to the vehicle electrical system (4) and the ground connection point (5),
- wherein at least two battery cell blocks (12, 13) and a plurality of switching elements (14, 15, 16, 17, 18, 19, 20) are provided in each battery submodule (23, 24, 25) for connecting the battery cell blocks (12, 13) optionally in parallel and/or in series,
- wherein in a first connection arrangement of the battery cell blocks (12, 13), the same are wired parallel to each other between the ground connection point (5) and the first connection to the vehicle electrical system (3), in such a way that at the first connection to the vehicle electrical system (3) the first vehicle electrical system voltage in relation to the ground connection point (5) is made available, and
- wherein the switching elements (14, 15, 16, 17, 18, 19, 20) in a second connection arrangement of the battery cell blocks (12, 13) are connecting the battery cell blocks (12, 13) of the battery submodules to each other in series between the first connection to the vehicle electrical system (3) and the second connection to the vehicle electrical system (4) such that at the second connection to the vehicle electrical system (4) a voltage in relation to the first connection to the vehicle electrical system (3) is made available for providing the second vehicle electrical system voltage, and
- wherein the two voltage battery (1) is set up in such a manner that when switching over the connection arrangement of the battery cell blocks (12, 13) of the battery submodules, there is always at least one battery submodule (23, 24, 25) that provides the first vehicle electrical system voltage and another battery submodule (23, 24, 25) that provides the second vehicle electrical system voltage, such that a temporary interruption in the provision of the low first vehicle electrical system voltage and the higher second vehicle electrical system voltage is avoided,
wherein a voltage across all battery cell blocks (12, 13) of the battery submodule (23, 24, 25) in the second connection arrangement corresponds to the voltage between the second connection to the vehicle electrical system (4) and the first connection to the vehicle electrical system (3).

2. Two voltage battery (1) in accordance with claim 1, **characterized in that** in the second connection arrangement a negative pole of a first battery cell block (12) of the battery submodule (23, 24, 25) is connected to the first connection to the vehicle electrical system (3) and a positive pole of a final battery cell block (13) of the battery submodule (23, 24, 25) is connected to the second connection to the vehicle electrical system (4).

3. Two voltage battery (1) in accordance with claim 2, **characterized in that** all battery submodules (23, 24, 25) are identical in design.

4. Two voltage battery (1) in accordance with one of claims 1 through 3, **characterized in that** a DC/DC converter (6) is provided between the first connection to the vehicle electrical system (3) and the second connection to the vehicle electrical system (4).

5. Two voltage battery (1) in accordance with one of claims 1 through 4, **characterized in that** an additional connection to the vehicle electrical system (26) is made available, wherein the battery cell blocks (12, 13) of the at least one battery submodule (23, 24, 25) can be brought into a parallel circuit as a third connection arrangement and/or into a series circuit as a fourth connection arrangement via the switching elements (14, 15, 16, 17, 18, 19, 20) and/or via additional switching elements (30, 31) in relation to the additional connection to the vehicle electrical system (26), and wherein all battery submodules (23, 24, 25) are arranged in parallel to each other in relation to the additional connection to the vehicle electrical system (26).

6. Two voltage battery (1) in accordance with claim 5, **characterized in that** the additional connection to the vehicle electrical system (26) is only formed within the battery and/or **in that** the first vehicle electrical system voltage is made available at the additional connection to the vehicle electrical system (26).

7. Two voltage battery (1) in accordance with one of claims 1 through 6, **characterized in that** a detector unit is provided for detecting a charging and/or discharging current and/or an impressed voltage and/or a voltage change at the second connection to the vehicle electrical system (4).

8. Two voltage battery (1) in accordance with one of claims 1 through 7, **characterized in that** a central control unit interacting with the switching elements (14, 15, 16, 17, 18, 19, 20) and/or the additional switching elements (30, 31) is provided, which depending on an input control signal actuates the switching elements (14, 15, 16, 17, 18, 19, 20) and/or the additional switching elements (30, 31) to bring the battery cell blocks (12, 13) into the first connection arrangement and/or into the second connection arrangement and/or into the third connection arrangement and/or into the fourth connection arrangement.

9. Two voltage battery (1) in accordance with claim 7 and 8, **characterized in that** the input control signal for the central control unit is provided by the detector unit.

## Revendications

1. Batterie à deux tensions (1) pour un véhicule
- avec au minimum un point de connexion de masse (5),
- avec un premier raccordement au réseau de bord (3), sur lequel est fournie une première tension de réseau de bord basse par rapport au point de connexion de masse (5), et
- avec un deuxième raccordement au réseau de bord (4), sur lequel est fournie une deuxième tension de réseau de bord haute par rapport au point de connexion de masse (5),
- où trois sous-modules de batterie (23, 24, 25) ou plus sont prévus, qui sont montés en parallèle les uns par rapport aux autres aussi bien par rapport au premier raccordement au réseau de bord (3) et au point de connexion de masse (5) que par rapport au deuxième raccordement au réseau de bord (4) et au point de connexion de masse (5),
- où chaque sous-module de batterie (23, 24, 25) dispose d'au moins deux blocs de cellules de batterie (12, 13) ainsi que de plusieurs éléments de commutation (14, 15, 16, 17, 18, 19, 20), qui sont prévus pour relier les blocs de cellules de batterie (12, 13) au choix en parallèle et/ou en série,
- où, dans un premier agencement de connexion des blocs de cellules de batterie (12, 13), ceux-ci sont connectés en parallèle entre le point de connexion de masse (5) et le premier raccordement au réseau de bord (3) de telle sorte que la première tension de réseau de bord est fournie au niveau du premier raccordement au réseau de bord (3) par rapport au point de connexion de masse (5), et
- où, dans un deuxième agencement de connexion des blocs de cellules de batterie (12 13) les éléments de commutation (14, 15, 16, 17, 18, 19, 20) reliant en série les blocs de cellules de batterie (12 13) du sous-module de batterie entre le premier raccordement au réseau de bord (3) et le deuxième raccordement au réseau de bord (4) de telle sorte qu'une tension est fournie sur le deuxième raccordement de réseau de bord (4) par rapport au premier raccordement de réseau de bord (3) pour fournir la deuxième tension de réseau de bord, et
- où la batterie à deux tensions (1) est agencée de telle sorte que, lors d'une commutation de l'agencement de connexion des blocs de cellules de batterie (12, 13) des sous-modules de batterie, au moins un sous-module de batterie (23, 24, 25) fournisse toujours la première tension de réseau de bord et un autre sous-module de batterie (23, 24, 25) la deuxième tension de réseau de bord, de telle sorte qu'une interruption temporaire dans l'approvisionnement de la première tension de réseau de bord basse et de la deuxième tension de réseau de bord plus élevée est évitée,
où une tension sur tous les blocs de cellules de batterie (12, 13) du sous-module de batterie (23, 24, 25) dans le deuxième agencement de connexion correspond à la tension entre le deuxième raccordement au réseau de bord (4) et le premier raccordement au réseau de bord (3).

2. Batterie à deux tensions (1) selon la revendication 1, **caractérisée en ce que** dans le deuxième agencement de connexion, un pôle négatif d'un premier bloc de cellules de batterie (12) du sous-module de batterie (23, 24, 25) est relié au premier raccordement au réseau de bord (3) et qu'un pôle positif d'un dernier bloc de cellules de batterie (13) du sous-module de batterie (23, 24, 25) est relié au deuxième raccordement au réseau de bord (4).

3. Batterie à deux tensions (1) selon la revendication 2, **caractérisée en ce que** tous les sous-modules de batterie (23, 24, 25) sont de construction identique.

4. Batteries à deux tensions (1) selon l'une des revendications 1 à 3, **caractérisée en ce qu'**un transformateur CC/CC (6) est prévu entre le premier raccordement au réseau de bord (3) et le deuxième raccordement au réseau de bord (4).

5. Batterie à deux tensions (1) selon l'une des revendications 1 à 4, **caractérisée en ce qu'**un raccordement au réseau de bord supplémentaire (26) est mis à disposition, où les blocs de cellules de batterie (12, 13) de l'au moins un sous-module de batterie (23, 24, 25) pouvant être amenés par l'intermédiaire des éléments de commutation (14, 15, 16, 17, 18, 19, 20) et/ou par l'intermédiaire d'éléments de commutation supplémentaires (30, 31) par rapport au raccordement supplémentaire au réseau de bord (26) dans un montage en parallèle comme troisième agencement de connexion et/ou dans un montage en série comme quatrième agencement de connexion, et où tous les sous-modules de batterie (23, 24, 25) sont disposés parallèlement les uns aux autres par rapport au raccordement supplémentaire au réseau de bord (26).

6. Batterie à deux tensions (1) selon la revendication 5, **caractérisée en ce que** le raccordement au réseau de bord supplémentaire (26) n'est réalisé qu'à l'intérieur de la batterie et/ou que la première tension de bord soit fournie au raccordement au réseau de bord supplémentaire (26).

7. Batterie à deux tensions (1) selon l'une des revendications 1 à 6, **caractérisée en ce qu'**une unité de détection est prévue pour la détection d'un courant de charge et/ou de décharge et/ou d'une tension imposée et/ou d'une variation de la tension au deuxième raccordement au réseau de bord (4).

8. Batterie à deux tensions (1) selon l'une des revendications 1 à 7, **caractérisée en ce qu'**une unité de commande centrale fonctionnant avec les éléments de commutation (14, 15, 16, 17, 18, 19, 20) et/ou les éléments de commutation supplémentaires (30, 31) soit prévue, laquelle, en fonction d'un signal de commande d'entrée, actionne les éléments de commutation (14, 15, 16, 17, 18, 19, 20) et/ou les éléments de commutation supplémentaires (30, 31) pour amener les blocs de cellules de batterie (12, 13) dans le premier agencement de connexion et/ou dans le deuxième agencement de connexion et/ou dans le troisième agencement de connexion et/ou dans le quatrième agencement de connexion.

9. Batterie à deux tensions (1) selon les revendications 7 et 8, **caractérisée en ce que** le signal de commande d'entrée est fourni pour l'unité de commande centrale de l'unité de détection.
